# EUROPEAN PATENT SPECIFICATION

(11) **EP 1 728 604 B1**
(45) Date of publication and mention of the grant of the patent: **15.10.2008**
(21) Application number: 05014514.3
(22) Date of filing: 05.07.2005
(51) Int. Cl.: B27B 9/04, B23Q 9/00

(54) **Circular saw with anti-kickback device**
Kreissäge mit Anti-Rückschlagmittel
Scie circulaire avec anti-rebond moyen

(30) Priority: 01.06.2005 EP 05253356
(43) Date of publication of application: 06.12.2006
(60) Divisional application: 07109070.8
(73) Proprietor: Black & Decker Inc., Newark, Delaware 19711 (US)
(72) Inventor: Wilson, Mike, Crook Co. Durham, DL15 9TN (GB); Rogers, Joanne, Bishop Auckland Co. Durham, DL14 6XL (GB)
(74) Representative: Clark, Charles Robert

(56) References cited:
- EP-A- 0 162 648
- EP-A- 1 418 018
- DE-A1-5102004 002 27

## Description

The present invention relates to anti-kickback devices suitable for use on a manually operated portable circular saw, or the like. The devices are particularly suited for use on a circular saw which has a plunge-cut action.

Circular saws with a plunge-cut action are known. Typically, such saws comprise a motor and gearbox disposed in a housing which includes a handle and manually operated switch for activating the motor. The housing is pivotally attached to a base plate which includes a cowl for accommodating a saw blade which is attached to the motor's or gearbox's output spindle. Springs are arranged to urge the housing into a position where the saw blade is wholly accommodated within the cowl. During use, a user places the base plate on a work-piece, depresses the switch to activate the motor thereby initiating the saw blade's rotation and then plunges the housing towards the work-piece and base plate such that the rotating saw blade passes through an aperture in the base plate and into the work-piece. From this position, the saw can be moved in a forward direction along a cut-line thereby cutting a slot in the work-piece. DE19635527 describes such a saw. Furthermore, FESTOOL GmbH sells such a saw under their product number TS55.

Kickback can occur as the saw is plunged into the work-piece. The kickback phenomenon is not wholly understood, but it often occurs in the early stages of plunging the blade into the work-piece. As the saw blade first engages with the work-piece kick-back can cause the saw to jump out of the work-piece and back towards the operator with sufficient force to hit the operator. Kick-back might also occur if the saw is twisted out of alignment with the cut during cutting so that the blade catches the edge of the slot cut by the blade. As kick-back occurs, it is thought that the blade "grabs" the work-piece in the slot being cut. In the worse case scenario, the blade can stop rotating with respect to the work-piece and, as the motor continues to drive the blade, the saw is thrown off the work-piece and towards the user. The user is typically unable to react as kick-back occurs and has insufficient time to disengage power to the motor.

Thus, kickback is potentially dangerous and could cause severe injury. Furthermore, if a guide rail is being used to guide the cutting direction of the saw as kickback occurs, the saw can jump out of the work-piece and across rail whilst the blade is exposed from the cowl and still rotating thereby damaging the rail and/or saw blade.

Guide rails are known and can be used to guide various power tools, such as circular saws, routers or jigsaws. The rail can be placed on a work-piece and the tool is then placed on the rail. Clamping devices are often used to secure the guide rail to the work-piece. Typically a rail comprises a length of extruding aluminium having a rib which extends along the length of the rail parallel to an edge of the rail along which the power tool operates. In the case of a circular saw, the rib engages with a channel formed in the base plate or footplate of the saw. The saw can be placed on the rail such that the rib and channel cooperate with one another. The operator is then able to run the saw along the rail whilst it cuts the work-piece. A strip of material having a relatively high coefficient of fiction is disposed on the surface of the rail which engages the work-piece to maintain the guide rail in position during use of the power tool. This is particularly useful if clamping devices are not being used.

EP1410818 describes a guide rail comprising a stop part having an overlapping portion. A plunge-action saw base plate has a protruding tang which fits between the guide rail and overlapping portion of the stop part. The stop part can be disposed in a channel running along the length of the guide rail and fixed in position with a thumbscrew arrangement. Before plunging the saw into a work-piece, the user places the guide rail on the work-piece and arranges the stop part in the desired position. The base plate of the saw is then positioned on the guide rail such that the tang abuts the stop part. Thus, if kickback occurs, the base plate is held on the rail and prevented from jumping backwards towards the operator by the stop part.

EP 1418018 describes a hand operated circular saw according to the preamble of claim 1.

Embodiments of the present invention aim to provide an improved anti-kickback mechanism. In short, an integral anti-kickback mechanism is provided. This arrangement has the advantage of negating the need for the separate anti-kickback device, as described above, which needs to be disposed on the guide rail and manually adjusted into the appropriate position for use.

More specifically, the present invention provides a hand operated circular saw comprising the features of claim 1.

In the first position, the saw blade disposed on the spindle is accommodated by the cowl and in the second position a portion of the saw blade protrudes through an aperture in the base plate. Of course, a portion of the saw blade might beexposed to the user when the blade is disposed in the cowl, such as a central portion of the blade to facilitate removal of the blade from the spindle.

The present invention also provides an anti-kickback device for use on a circular saw comprising a mechanism arranged to cooperate with a portion of a guide rail when the saw is disposed on a guide rail, such that during use the mechanism allows the saw to move with respect to the guide rail in a first direction and the mechanism prevents free movement of the saw with respect to the guide rail in a second direction opposite to the first direction. Thus, an anti-kickback device according to the present invention could be retro-fitted to existing circular saws which do not have an anti-kickback device.

Preferably, the anti-kickback mechanism comprises a slide member having a contact surface, said roller being arranged on a slide surface such that the roller can move between a top and bottom position on the slide surface, and the contact surface is arranged to face an opposite surface of the channel in the saw's base plate. The contact surface is used to jam the rib of a guide rail, gripping it between the walls of the base plate's channel and preventing further movement in the second direction.

Preferably, the slide surface is inclined with respect to the opposite surface such that a distance between the contact surface and opposite surface varies as the roller moves between the top and bottom positions. Furthermore, the slide surface is preferably linear and the angle of inclination is preferably in the plane of the saw's base plate. Yet further, the angle of inclination can be between 4 and 10 degrees, and is preferably 6.5 degrees. Thus, effective protection against inadvertent movement of the saw in the second direction can be achieved by the interaction of the contact surface, guide rail rib, opposite surface, and slide surface.

Preferably, the contact surface is defined as the point of contact between the roller and guide rail rib, when the saw is disposed on the guide rail. Advantageously, a roller is less prone to jamming and can operate with a lower likelihood of the saw becoming jammed to the guide rail when the saw is moved in the first direction. Preferably, the roller comprises a bevelled edge to facilitate easy instalment of the guide rail rib in the channel as the saw is disposed onto the guide rail.

Preferably, the roller is urged into the top position by a spring. Thus, the roller is urged into a position where the contact surface makes contact with the guide rail rib no matter whether the saw is moving in the first or second directions. As a result, only a very small movement in the second direction is required to cause jamming of the rib by the anti-kickback device.

Preferably, the distance between the contact surface and opposite surface is less than the width of the channel when the roller is in the top position. Furthermore, the distance between the contact surface and opposite surface is preferably greater than the width of a guide rail's rib when the slide member is in the bottom position.

Preferably, embodiments of the present invention further comprise a manually operable button coupled to the mechanism, the button being moveable between an operative and inoperative position, such that, when the button is in the inoperative position, the mechanism offers relatively high friction between the saw and guide rail if the saw is moved in the second direction. Furthermore, the mechanism offers relatively low friction between the saw and guide rail in the first direction when the button is inoperative position. Preferably, the button is fixedly coupled to the mechanism by a pin and the pin can pass through a slot disposed in the base plate. The slot is preferably linear in its longitudinal direction and is angled with respect to the channel within an angular range, and the angular range is from an angle parallel to the channel and 10 degrees with respect to the channel. Preferably, a spring is arranged to urge the button into the inoperative position. Thus, the operator of the saw can override the anti-kickback device when the saw is disposed on a guide rail.

Preferably, the spring has a first moveable end adapted to be in contact with the roller and second end held in position relative to the base plate by a clamp. The clamp can comprise a portion of the base plate adapted to receive one or more components of the mechanism, and a mechanism retaining plate. Either one, or both, of the portion of the base plate or retaining plate comprise a protrusion adapted to fix the second end of the spring in relation to the base plate. Thus, the spring is securely held in the anti-kickback device using simple mechanical arrangements that are relatively easy and cheap to manufacture.

Preferably, a coupling member is arranged between the spring and roller. The coupling member is disposable on the first end of the spring and the first end is held in position relative to the coupling member by a cup or nipple. Preferably the coupling member has a cup portion adapted to receive a portion of the roller. Thus, the coupling member can be adapted to prevent the spring from disengaging with the slide member.

Embodiments of the present invention are now described by way of example, with reference to the following drawings, in which
Figure 1 shows a schematic diagram of a circular saw embodying the present invention and being disposed on a guide rail;
Figure 2 shows schematically an anti-kickback device known in the art;
Figure 3 shows a cut-away view of the anti-kickback device of Figure 2;
Figure 4 shows a second embodiment of an anti-kickback device embodying the present invention, shown in a schematic cut-away view;
Figure 5 shows the second embodiment in cross-section along line 5-5 of figure 4, and being disposed on a guide rail;
Figure 6 shows a schematic diagram of another anti-kickback device known in the art;
Figure 7 shows a schematic diagram of another embodiment of the present invention disposed in a guide rail, and shown in cross-section along line 5-5 of figure 4;
Figure 8 shows the embodiment of figure 7 in plan view;
Figure 9 shows a schematic diagram of a yet further embodiment of the present invention; and
Figure 10 shows a schematic diagram of a still further embodimentof the present invention.

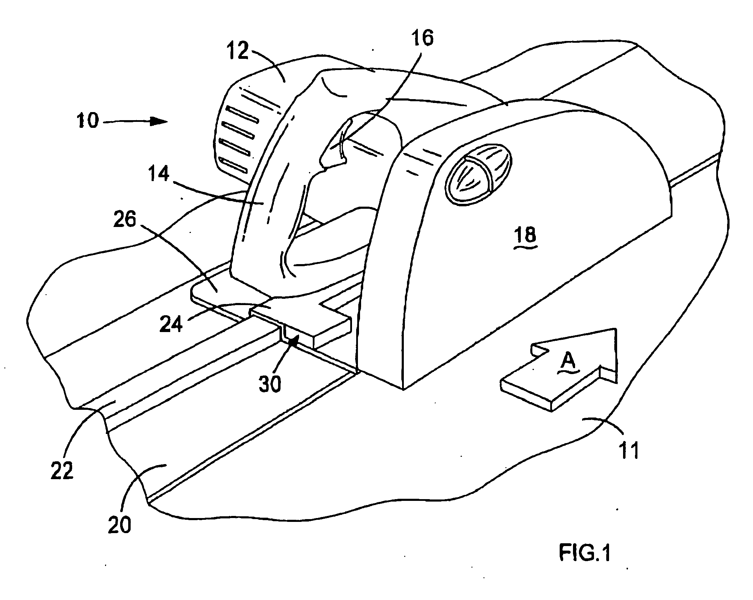

Referring to figure 1, a circular saw 10 embodying the present invention is shown in schematic form and in the plunged orientation whereby the saw blade (not shown) engages with a work-piece 11. The saw 10 comprises a motor housing 12 which includes a handle or gripping portion 14 having a switch 16 for operating the motor. A protective cowl 18 is arranged to house the saw blade. The saw is disposable on to a guide rail 20 which comprises a longitudinal rib 22. The rib engages with a channel 24 arranged on a footplate 26 of the saw 10. Thus, the saw is able to run along the guide rail, being guided by the cooperation of the rib and channel on the rail and saw respectively.

An anti-kickback device 30 is disposed on the saw's footplate 26. The device comprises a means for allowing relatively free movement of the saw in the cut direction, as indicated by arrow A, but the anti-kickback device further provides a means for preventing or restricting movement of the saw in a direction opposite to arrow A (that is, opposite to the direction of cut).

This can be achieved by providing a means for gripping the rib of the guide rail in one direction and allowing free movement in the other direction. Thus, as the saw is plunged into the work-piece, the saw can be prevented from moving in a backwards direction towards the user (opposite to arrow A) by a force exerted onto the saw as the blade engages the work-piece during plunging, for instance. Such a force exerted in this backward direction causes the anti-kick device to grip the saw to the guide rail with sufficient friction that the saw is prevented from moving towards the user along the rail. Furthermore, the saw can be prevented from jumping off the guide rail by the anti-kickback device's gripping action onto the guide rail. In this manner, the saw can be held on the guide rail when/if kickback occurs. The saw is held to the work-piece if damping devices are used to secure the guide rail on the work-piece, via the indirect coupling of the saw to the guide rail, and the guide rail to the work-piece.

Various examples of anti-kickback devices embodying the present invention are now described. Of course, the invention is not limited to these examples.

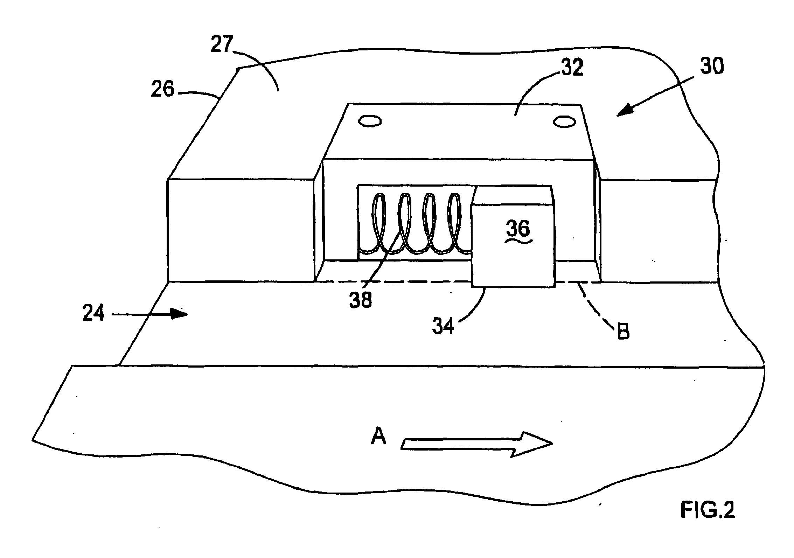

Referring to figure 2, a known embodiment 32 of an anti-kickback device 30 is shown schematically. The device 32 comprises a block 34 a portion of which extends into the channel 24 of the footplate 26 by a relatively small distance beyond the dashed line B in a first position. A surface 36 of the block is arranged to engage with a side face of the guide rail's rib when the saw is disposed on the guide rail. The block is urged into the first position by a spring 38. In the first position, the distance by which the block's surface 36 extends into the channel is sufficient for the surface to contact the rail's rib.

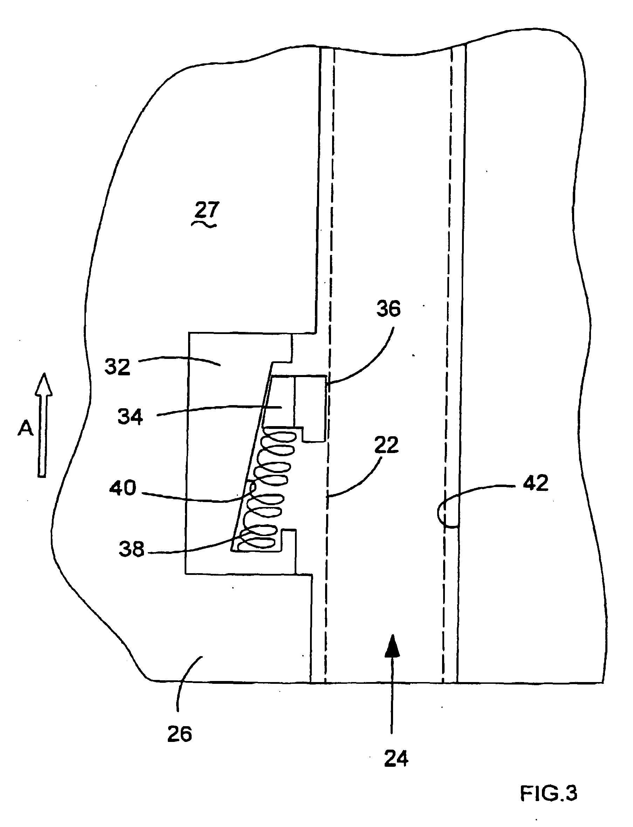

Referring to figure 3, a plan view of the known embodiment is shown in schematic form. The position a guide rail rib would occupy when the saw is disposed on the rail is shown as a dotted line 22; this line 22 indicates the rib disposed in the footplate channel 24. The block 34 can move with respect to the footplate 27 in a direction generally parallel to arrow A, since the block slides along a surface 40 which is inclined with respect to the opposite wall 42 of the channel. Thus, the distance between the guide rail rib and the surface 36 of the block varies depending on the position of the block in the device 32. The block can act as a brake by jamming the rib 22 between the block's surface 36 and opposing surface 42 of the channel when the footplate moves relative to the rib in an opposite direction to that indicated by arrow A. Conversely, the block imparts a relatively low amount of friction on the rib when the rib moves in a direction parallel to arrow A with respect to the device 32.

The spring 38 urges the block into a position such that the block 34 engages the rib when there is no relative movement of the rib and footplate. In this manner, the slightest movement of the footplate in a direction opposite to arrow A causes the block to move in a direction generally parallel to A relative to the anti-kickback device 32, thereby reducing the distance between the opposing surface of the block and channel, 36 and 42 respectively, and jamming the rib between the sliding surface 40, block and channel surface 42. However, relative movement of the footplate to the rib in a direction indicated by A is permitted because the block offers little friction between the footplate and rib. The spring constant of spring 40 should be chosen so that the force exerted on the block by the spring is relatively low.

The optimum angle of inclination between the sliding surface 40 and opposite channel surface 42 is between 4 and 10 degrees and preferably 6.5 degrees. However, any angle between 2 and 15 degrees can be used.

The block and spring are held in position in the anti-kickback device by a top-plate, not shown in figure 3, which is arranged to be flush with the underside surface 27 of the footplate 26.

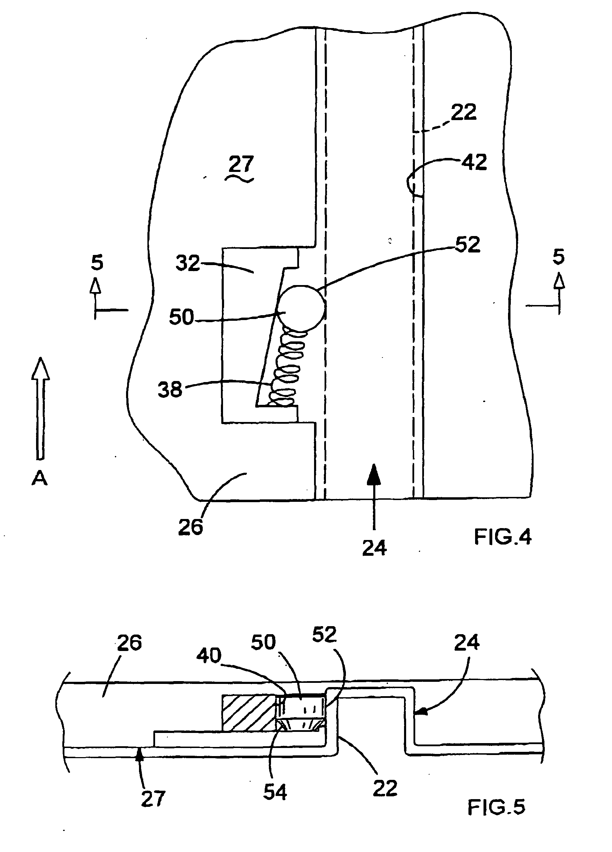

In a first embodiment, shown in figure 4, the block is replaced by a roller 50. In all other respects, the known and first embodiments operate on the same principle. The roller is cylindrical or drum-shaped so that its circumferential surface 52 engages with the rib and sliding surface. Figure 5 shows the first embodiment in cross-section along the line 5-5 (figure 4). The roller has a bevelled edge 54 which allows the saw to be placed directly on top of the rib (rather than sliding the saw onto the guide rail from one end of the rail). In other words, as the saw is placed on the guide rail, the bevelled edge of the roller 50 allows the rid to move between the roller and surface 42, gently easing the roller out of the rib's path as the rib and channel engage one another. This action can be assisted if the rib has a rounded edge, in cross-section.

Use of a roller is preferable to a sliding block arrangement as described for the first embodiment. It has been found that a roller is less likely to jam as the saw is moved down a guide rail in direction A: In some cases, the block can twist causing jamming between the block and the rib.

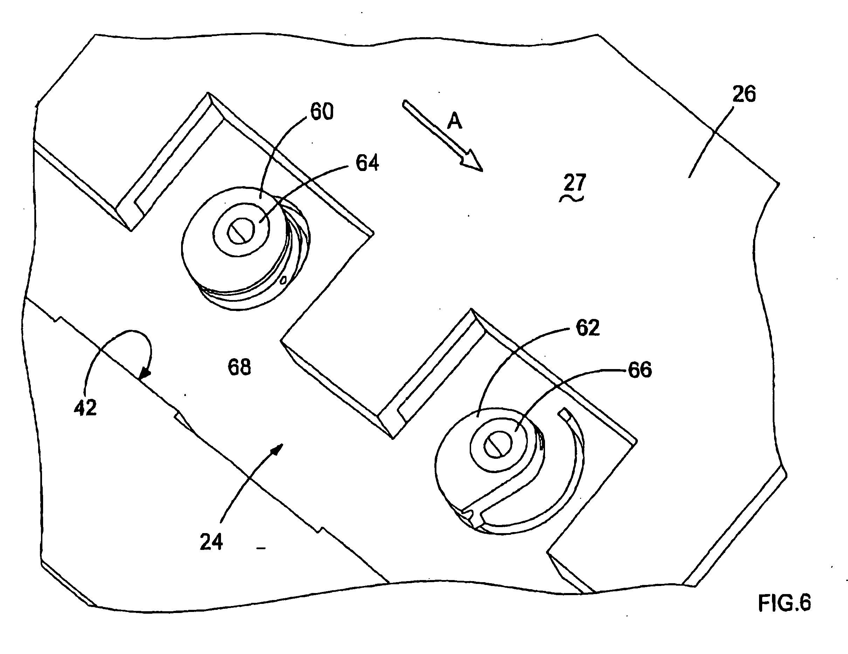

Another known embodiment is shown schematically in figure 6. This embodiment comprises one or more cam wheels 60, 62. The cam is held in position by a pin 64 and 66 respectively, about which each cam rotates. The cam has a contact surface 68 arranged to face an opposite surface of the channel such that a guide rail rib can fit between the contact surface of the cam and guide rail. The cam is rotatably moveable between a first and second position, such that in the first position, the distance between the contact surface of the cam and the opposite surface of the channel is less than the width of the guide rail's rib, and in the second position, the distance between the contact and opposite surface respectively is greater than the width of the channel in which the rib is locatable.

A watch spring (not shown) can be used to urge the cams into a position where the cam engages with the guide rail's rib when the saw is disposed on the rail. The cam should be configured to operate with the same principles as those described above, that is to act a brake by jamming the rib in the channel to prevent relative movement of the rib in one direction, but to allow free movement of the rib in another opposite direction A. Thus, the smallest distance between the cam's contact surface 68 and the opposite surface of the channel 42 should be less than the width of the rib fitting into the channel (i.e. when the cam is in the first position, as discussed earlier).

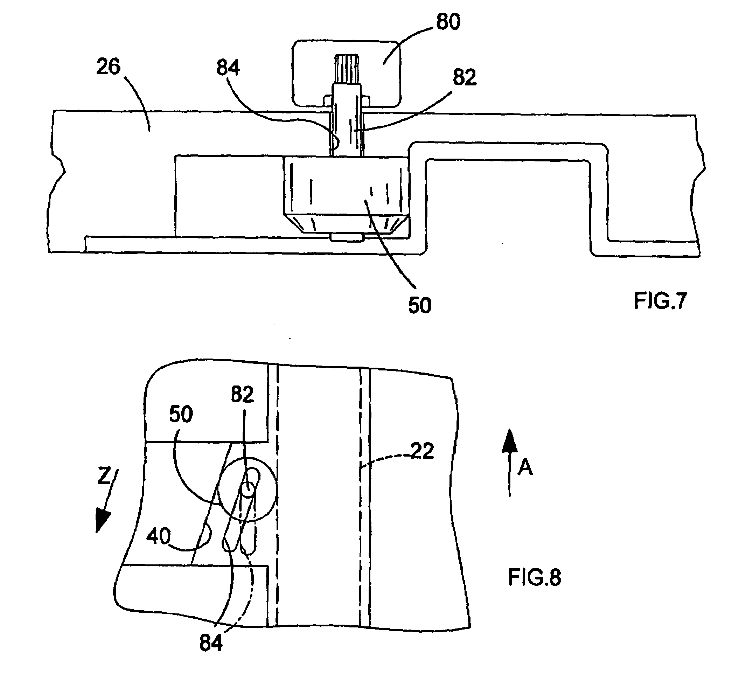

In addition, the anti-kickback device can be provided with a manually operable button 80, as shown in figure 7. The button is coupled to the roller 50 by a pin 82. Preferably, the pin 82 is fixed to the roller so that it can not rotate with respect to the roller, although it is to be understood that non-fixed configuration could also be used. The pin is guided by a slot 84 passing through the footplate 26. The slot is linear in its longitudinal direction and has a width which is greater than the diameter of the pin to allow relatively free or unhindered movement of the pin therein. The slot can have parallel sides which are angled with respect to the guide rail rib or footplate channel within an angular range arranged to be between zero degrees (that is, parallel to the guide rail rib) and parallel to the sliding surface 40, with reference to figure 8.

The button provides a means for the user to free or unlock the anti-kickback device should it become jammed during operation. The user is able to rotate the button to free the roller 50 from the guide rail rib 22 after a jamming event has occurred. Where the roller is fixedly attached to the button, rotation of the button causes the roller to rotate and free itself from the guide rail rib and sliding surfaces between which it has become jammed.

Furthermore, the user can move the roller out of contact with the guide rail rib by pulling the button in a direction which moves the roller along or substantially along the sliding surface 40. By holding the button in this operative position, the roller is held away from the sliding surface and the anti-kickback device can be overridden. In other words, the user is thereby able to deactivate the anti-kickback device and move the circular saw along the guide rail in a direction opposite to arrow A (see figure 1, for instance) without the anti-kickback device locking the saw's footplate to the guide rail. This is an advantageous feature of the present invention because it allows the user to bring the saw back to a starting position on the guide rail after a cut has been completed without having to lift the saw from and then replace it on the guide rail at the start position. Preferably, the direction in which the button is pulled to deactivate the anti-kickback device (as shown by arrow Z in figure 8) is opposite to the cut direction, that is, opposite to Arrow A. Thus, the user can release the anti-kickback device and pull the saw along the guide rail in a direction opposite to A with one movement or action, and single handed.

The button is moveable to the operative position against the resilience of spring. Releasing the button therefore causes it, and hence the roller, to move to the button's inoperative position, where the roller contactable with the guide rail rib.

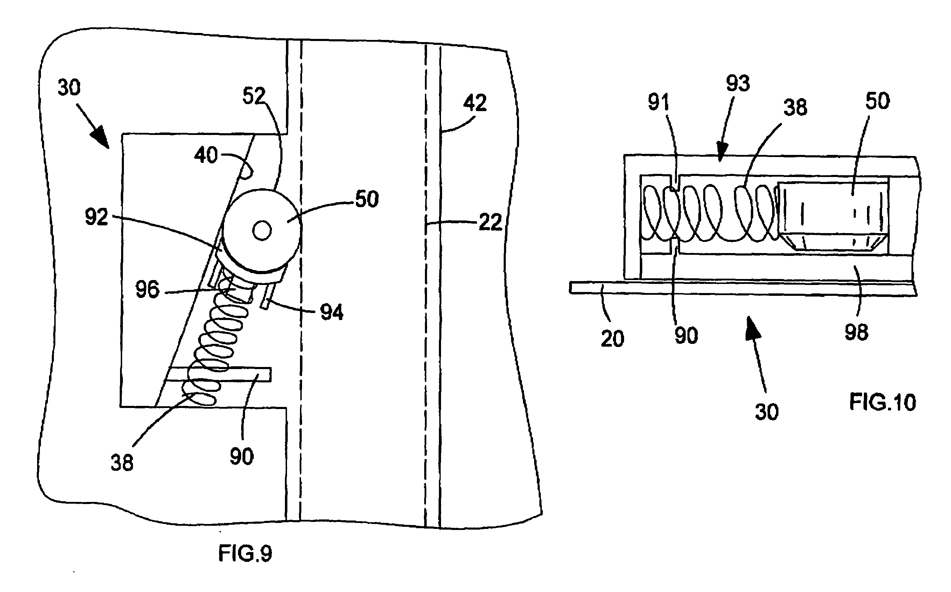

Referring now to figure 9, a coupling member 92 for coupling the spring 38 to the roller 50 is shown. The coupling member has a generally cup-shaped profile adapted to receive the circumference 52 of the roller 50. The coupling member also comprises protrusions 94 which can form a cavity into which a first end of the spring is received. A nipple 96 can be provided to fit inside the coils of a spring and thereby hold the spring in relation to the coupling member, and hence the roller. A combination of both the protrusions 94 and nipple 96 are preferred, but either one of these arrangements could be used independently.

A bar or rib-like protrusion 90 can be arranged on either or both of the footplate and/or a cover or retaining plate of the anti-kickback mechanism for retaining a second end of the spring In relation to the footplate. Referring to figure 10, a bar-like protrusion 90 extends from a retaining plate 98 of the anti-kickback device 30. The retaining plate acts to retain the components of the anti-kickback device on the saw's footplate 26, amongst other functions. The rib is arranged to pinch the spring against a portion 93 of the footplate adapted to receive the anti-kickback device. In the case of a coil spring, the rib can be arranged to fit between neighbouring coils of the spring. A further protrusion 91 can be disposed on the portion 93 of the footplate to further pinch the spring member. Thus, the second end of the spring can be held in a position relative the saw's footplate. Of course, either or both or the protrusions 90 and 91 can be used.

The coupling member and/or the spring member retaining protrusion 90 act to help prevent the spring from disengaging with components of the anti-kickback device. This can assist with reducing the likelihood of the anti-kickback failing. Thus, the operator is able to utilise the device for long periods without having to service the anti-kickback device

The block, roller or cam can be made from any suitable material, such as metal (steel or aluminium for instance), synthetic plastic (high impact nylon for instance), or resilient material (such as rubber). Factors, such as cost of manufacture, wear rates and coefficient of friction, may influence the choice of material.

Other embodiments of the present invention will be envisaged by the skilled person. For instance it is perceived that a separate anti-kickback device could be retro-fitted to a plunge-action circular saw's footplate by means of bolts engaging with threaded holes in the footplate, or the like. Furthermore, it is not essential that the anti-kickback device is disposed on the footplate and a series of anti-kickback devices could be disposed on a guide rail arranged to engage with the footplate channel of a circular saw. Yet further, it might be desirable to arrange for an anti-kickback device to operate between the footplate and an alternative portion of the guide rail, other than the longitudinal rib. Still further, it might be possible to provide an anti-kickback device without a spring to urge the jamming device into a first position. For instance, if the block were made from a resilient material, such as rubber, the device could be arranged such that a spring is not necessary - the resilience of the material acts to urge the block into a suitable position. Also, the spring is not limited to a coil spring as shown in the drawings, and other resilient means could be used, such as a leaf spring or a rod of resilient material (rubber, for instance).

## Claims

1. A hand operated circular saw (10) comprising;
a base plate (26) comprising a channel (24) arranged to cooperate with a guide rail (20),
a motor housing (12),
a gripping portion (14) and a switch (16) for manual operation of a motor disposed in the motor housing, and
a cowl (18) coupled to the base plate and arranged to accommodate at least a portion of a saw blade disposed on an output spindle coupled to the motor,
said output spindle being moveable with respect to the base plate and/or cowl between a first position and a second position thereby providing a plunge-cut action of the circular saw;
**characterised in that** the base plate further comprises :
an anti-kickback mechanism (30) arranged to cooperate with a portion of the guide rail such that, when the circular saw is disposed on the guide rail, the anti-kickback mechanism offers relatively low friction between the saw and guide rail in a first direction thereby allowing the saw to be moved manually with respect to the guide rail in the first direction, and the anti-kickback mechanism offers relatively high friction between the saw and guide rail in a second direction thereby preventing free movement of the saw with respect to the guide rail in the second direction, wherein the anti-kickback mechanism comprises a roller (50) having a contact surface (52) and being arranged on a slide surface (40) such that the roller can move between a top and bottom position on the slide surface, the contact surface is arranged to face an opposite surface (42) of the channel in the saw's base plate, and wherein further said slide surface is inclined with respect to the opposite surface such that a distance between the contact surface and opposite surface varies as the roller moves between the top and bottom positions.

2. Apparatus according to claim 1, wherein the slide surface is linear and the angle of inclination is in the plane of the saw's base plate.

3. Apparatus according to claim 2, wherein the angle of inclination is between 4 and 10 degrees, and preferably 6.5 degrees.

4. Apparatus according to any one of the preceding claims, wherein the distance between the contact surface and opposite surface is less than the width of the channel when the roller is in the top position.

5. Apparatus according to any one of the preceding claims, wherein the distance between the contact surface and opposite surface is greater than the width of a guide rail's rib when the roller is in the bottom position.

6. Apparatus according to any one of the preceding claims, wherein the contact surface is defined as the point of contact between the roller and a guide rail rib (22), when the saw is disposed on the guide rail.

7. Apparatus according to claim 6, wherein the roller comprises a bevelled edge (54) to facilitate instalment of the guide rail rib in the channel as the saw is disposed onto the guide rail.

8. Apparatus according to any one of the preceding claims, wherein the roller is urged into the top position by a spring (38) or resilient member.

9. Apparatus according to any one of the preceding claims, further comprising a manually operable button (80) coupled to the anti-kickback mechanism, the button being moveable between an operative and inoperative position, such that, when the button is in the inoperative position, the anti-kickback mechanism offers relatively high friction between the saw and guide rail if the saw is moved in the second direction.

10. Apparatus according to claim 9, wherein, the anti-kickback mechanism offers relatively low friction between the saw and guide rail in the first direction when the button is in the inoperative position.

11. Apparatus according to claim 9, wherein the button is fixedly coupled to the mechanism by a pin (82).

12. Apparatus according to claim 9 or 11, wherein the pin passes through a slot (84) disposed in the base plate.

13. Apparatus according claim 12, wherein the slot is linear in its longitudinal direction and is angled with respect to the channel within an angular range.

14. Apparatus according to claim 13, wherein the angular range is from an angle parallel to the channel and 10 degrees with respect to the channel.

15. Apparatus according to claim 9, wherein a spring is arranged to urge the button into the inoperative position.

16. Apparatus according to claim 8, wherein the spring has a first moveable end adapted to be in contact with the roller and a second end held in position relative to the base plate by a clamp.

17. Apparatus according to claim 16, wherein the clamp comprises a portion of the base plate adapted to receive one or more components of the anti-kickback mechanism, and a anti-kickback mechanism retaining plate.

18. Apparatus according to claim 17, wherein either one, or both, of the portion of the base plate or retaining plate comprising a protrusion (90, 91) adapted to fix the second end of the spring in relation to the base plate.

19. Apparatus according to claim 8 or 16, further comprising a coupling member (92) arranged between the spring and roller.

20. Apparatus according to claim 19, wherein the coupling member is disposed on the first end of the spring and the first end is held in position relative to the coupling member by a cup (94) or nipple (96).

21. Apparatus according to claim 19, wherein the coupling member has a cup portion adapted to receive a portion of the roller.

22. Apparatus according to claim 19, wherein the coupling member is adapted to prevent the spring from disengaging with the roller.

## Patentansprüche

1. Handbetätigte Kreissäge (10) mit
einer Basisplatte (26), die einen Kanal (24) aufweist, der angeordnet ist, um mit einer Führungsschiene (20) zusammenzuwirken,
einem Motorgehäuse (12),
einem Griffabschnitt (14) und einem Schalter (16) für eine manuelle Betätigung eines Motors, der in dem Motorgehäuse angeordnet ist, und
einer Haube (18), die mit der Basisplatte gekoppelt und angeordnet ist, um zumindest einen Teil eines Sägeblatts aufzunehmen, das an einer Ausgangswelle angeordnet ist, die mit dem Motor gekoppelt ist,
wobei die Ausgangswelle in Bezug auf die Basisplatte und/oder die Haube zwischen einer ersten Stellung und einer zweiten Stellung beweglich ist, um dabei eine Tauchsägewirkung der Kreissäge bereitszustellen,
**dadurch gekennzeichnet, dass** die Basisplatte ferner aufweist:
einen Anti-Rückschlagmechanismus (30), der angeordnet ist, um mit einem Abschnitt der Führungsschiene zusammenzuwirken, so dass, wenn die Kreissäge an der Führungsschiene angeordnet ist, der Anti-Rückschlagmechanismus eine vergleichsweise geringe Reibung zwischen der Säge und der Führungsschiene in einer ersten Richtung liefert, um der Säge dabei zu ermöglichen, von Hand in Bezug auf die Führungsschiene in der ersten Richtung bewegt zu werden, und dass der Anti-Rückschlagmechanismus eine vergleichsweise hohe Reibung zwischen der Säge und der Führungsschiene in einer zweiten Richtung liefert, um dabei eine freie Bewegung der Säge in Bezug auf die Führungsschiene in der zweiten Richtung zu verhindern, wobei der Anti-Rückschlagmechanismus eine Rolle (50) mit einer Kontaktfläche (52) aufweist, die an einer Gleitfläche (40) angeordnet ist, so dass sich die Rolle zwischen einer oberen und einer unteren Stellung an der Gleitfläche bewegen kann, wobei die Kontaktfläche angeordnet ist, einer gegenüberliegenden Fläche (42) des Kanals in der Basisplatte der Säge gegenüberzuliegen, und wobei ferner die Gleitfläche in Bezug auf die gegenüberliegende Fläche geneigt ist, so dass sich ein Abstand zwischen der Kontaktfläche und der gegenüberliegenden Fläche verändert, wenn sich die Rolle zwischen der oberen und der unteren Stellung bewegt.

2. Vorrichtung nach Anspruch 1, wobei die Gleitfläche geradlinig ist und der Neigungswinkel in der Ebene der Basisplatte der Säge liegt.

3. Vorrichtung nach Anspruch 2, wobei der Neigungswinkel zwischen 4 und 10 Grad und vorzugsweise 6,5 Grad beträgt.

4. Vorrichtung nach einem der vorhergehenden Ansprüche, wobei der Abstand zwischen der Kontaktfläche und der gegenüberliegenden Fläche geringer als die Breite des Kanals ist, wenn die Rolle in der oberen Stellung ist.

5. Vorrichtung nach einem der vorhergehenden Ansprüche, wobei der Abstand zwischen der Kontaktfläche und der gegenüberliegenden Fläche größer als die Breite einer Rippe der Führungsschiene ist, wenn die Rolle in der unteren Stellung ist.

6. Vorrichtung nach einem der vorhergehenden Ansprüche, wobei die Kontaktfläche als der Berührungspunkt zwischen der Rolle und einer Rippe (22) der Führungsschiene definiert ist, wenn die Säge an der Führungsschiene angeordnet ist.

7. Vorrichtung nach Anspruch 6, wobei die Rolle eine geneigte Kante (54) aufweist, um ein Installieren der Rippe der Führungsschiene in dem Kanal zu erleichtern, wenn die Säge auf die Führunsschiene gesetzt wird.

8. Vorrichtung nach einem der vorhergehenden Ansprüche, wobei die Rolle durch eine Feder (38) oder ein elastisches Element in die obere Stellung gedrückt wird.

9. Vorrichtung nach einem der vorhergehenden Ansprüche, ferner mit einem von Hand betätigbaren Knopf (80), der mit dem Anti-Rückschlagmechanismus gekoppelt ist, wobei der Knopf zwischen einer betätigten und einer nicht-betätigten Stellung beweglich ist, so dass, wenn der Knopf in der nicht-betätigten Stellung ist, der Anti-Rückschlagmechanismus eine vergleichsweise geringe Reibung zwischen der Säge und der Führungsschiene liefert, wenn die Säge in der zweiten Richtung bewegt wird.

10. Vorrichtung nach Anspruch 9, wobei der Anti-Rückschlagmechanismus eine vergleichsweise geringe Reibung zwischen der Säge und der Führungsschiene in der ersten Richtung liefert, wenn der Knopf in der nicht-betätigten Stellung ist.

11. Vorrichtung nach Anspruch 9, wobei der Knopf fest mit dem Mechanismus durch einen Stift (82) verbunden ist.

12. Vorrichtung nach Anspruch 9 oder 11, wobei der Stift durch einen Schlitz (84), der in der Basisplatte vorgesehen ist, läuft.

13. Vorrichtung nach Anspruch 12, wobei der Schlitz geradlinig in seiner Längsrichtung und in Bezug auf den Kanal in einem Winkelbereich geneigt ist.

14. Vorrichtung nach Anspruch 13, wobei der Winkelbereich von einem Winkel parallel zu dem Kanal und 10 Grad in Bezug auf den Kanal reicht.

15. Vorrichtung nach Anspruch 9, wobei eine Feder vorgesehen ist, um den Knopf in die nicht-betätigte Stellung zu drücken.

16. Vorrichtung nach Anspruch 8, wobei die Feder ein erstes bewegliches Ende aufweist, das angepasst ist, um in Kontakt mit der Rolle zu sein, und ein zweites Ende, das durch eine Klemme in Position relativ zu der Basisplatte gehalten ist.

17. Vorrichtung nach Anspruch 16, wobei die Klemme einen Abschnitt der Basisplatte umfasst, der angepasst ist, einen oder mehrere Bauteile des Anti-Rückschlagmechanismus' aufzunehmen, und eine Anti-Rückschlagmechanismus-Halteplatte.

18. Vorrichtung nach Anspruch 17, wobei entweder eine oder beide aus dem Abschnitt der Basisplatte und der Halteplatte einen Vorsprung (90, 91) aufweisen, der angepasst ist, das zweite Ende der Feder in Bezug auf die Basisplatte festzulegen.

19. Vorrichtung nach Anspruch 8 oder 16, ferner mit einem Kupplungselement (92), das zwischen der Feder und der Rolle angeordnet ist.

20. Vorrichtung nach Anspruch 19, wobei das Kupplungselement an dem ersten Ende der Feder angeordnet ist und das erste Ende in Position relativ zu dem Kupplungselement durch eine Hülse (94) oder einen Ansatz (96) gehalten ist.

21. Vorrichtung nach Anspruch 19, wobei das Kupplungselement einen Hülsenabschnitt aufweist, der angepasst ist, einen Abschnitt der Rolle aufzunehmen.

22. Vorrichtung nach Anspruch 19, wobei das Kupplungselement angepasst ist, die Feder daran zu hindern, sich von der Rolle zu lösen.

## Revendications

1. Scie circulaire manuelle (10) comprenant :
◆ une plaque de base (26) comprenant un canal (24) agencé de sorte à coopérer avec une glissière de guidage (20) ;
◆ un boîtier de moteur (12),
◆ une partie de préhension (14) et un commutateur (16) pour l'actionnement manuel d'un moteur disposé dans le boîtier de moteur, et
◆ un capot (18) couplé à la plaque de base et agencé de sorte à loger au moins une partie d'une lame de scie disposée sur une broche de sortie couplée au moteur,
ladite broche de sortie pouvant se déplacer par rapport à la plaque de base et/ou au capot entre une première position et une seconde position, assurant ainsi une action de coupe en plongée de la scie circulaire ;
**caractérisée en ce que** la plaque de base comprend en outre :
un mécanisme anti-recul (30) agencé de manière à coopérer avec une partie de la glissière de guidage de sorte que, quand la scie circulaire est disposée sur la glissière de guidage, le mécanisme anti-recul offre un frottement relativement faible entre la scie et la glissière de guidage dans une première direction, permettant ainsi à la scie d'être déplacée manuellement par rapport à la glissière de guidage dans la première direction, et le mécanisme anti-recul offre un frottement relativement élevé entre la scie et la glissière de guidage dans une seconde direction, empêchant ainsi le mouvement libre de la scie par rapport à la glissière de guidage dans la seconde direction, dans laquelle le mécanisme anti-recul comprend un rouleau (50) ayant une surface de contact (52) et étant agencé sur une surface de glissement (40) de telle sorte que le rouleau puisse se déplacer entre une position supérieure et une position inférieure sur la surface de glissement, la surface de contact étant agencée de sorte à être orientée vers une surface opposée (42) du canal dans la plaque de base de la scie, et dans laquelle en outre ladite surface de glissement est inclinée par rapport à la surface opposée de sorte qu'une distance entre la surface de contact et la surface opposée varie à mesure que le rouleau se déplace entre les positions supérieure et inférieure.

2. Appareil selon la revendication 1, dans lequel la surface de glissement est linéaire et l'angle d'inclinaison est sur le plan de la plaque de base de la scie.

3. Appareil selon la revendication 2, dans lequel l'angle d'inclinaison est de 4 à 10 degrés, de préférence 6,5 degrés.

4. Appareil selon l'une quelconque des revendications précédentes, dans lequel la distance entre la surface de contact et la surface opposée est inférieure à la largeur du canal quand le rouleau est dans la position supérieure.

5. Appareil selon l'une quelconque des revendications précédentes, dans lequel la distance entre la surface de contact et la surface opposée est supérieure à la largeur d'une nervure de glissière de guidage (22) quand le rouleau est dans la position inférieure.

6. Appareil selon l'une quelconque des revendications précédentes, dans lequel la surface de contact est définie comme le point de contact entre le rouleau et une nervure de glissière de guidage (22) quand la scie est disposée sur la glissière de guidage.

7. Appareil selon la revendication 6, dans lequel le rouleau comprend un bord biseauté (54) pour faciliter le positionnement de la nervure de glissière de guidage dans le canal à mesure que la scie est disposée sur la glissière de guidage.

8. Appareil selon l'une quelconque des revendications précédentes, dans lequel le rouleau est sollicité dans la position supérieure par un ressort (38) ou élément élastique.

9. Appareil selon l'une quelconque des revendications précédentes, comprenant en outre un bouton (80) actionnable à la main, couplé au mécanisme anti-recul, le bouton pouvant être déplacé entre une position de marche et une position d'arrêt, de telle sorte que, quand le bouton est dans la position d'arrêt, le mécanisme anti-recul offre un frottement relativement élevé entre la scie et la glissière de guidage si la scie est déplacée dans la seconde direction.

10. Appareil selon la revendication 9, dans lequel le mécanisme anti-recul offre un frottement relativement faible entre la scie et la glissière de guidage dans la première direction quand le bouton est dans la position d'arrêt.

11. Appareil selon la revendication 9, dans lequel le bouton est couplé de manière fixe au mécanisme, au moyen d'une broche (82).

12. Appareil selon la revendication 9 ou 11, dans lequel la broche traverse une fente (84) disposée dans la plaque de base.

13. Appareil selon la revendication 12, dans lequel la fente est linéaire dans le sens de sa longueur et elle forme avec le canal un angle appartenant à une plage angulaire.

14. Appareil selon la revendication 13, dans lequel la plage angulaire va d'un angle parallèle au canal à un angle de 10 degrés par rapport au canal.

15. Appareil selon la revendication 9, dans lequel un ressort est agencé de sorte à solliciter le bouton dans la position d'arrêt.

16. Appareil selon la revendication 8, dans lequel le ressort a une première extrémité mobile adaptée pour être en contact avec le rouleau et une seconde extrémité retenue en place par rapport à la plaque de base par une pince.

17. Appareil selon la revendication 16, dans lequel la pince comprend une partie de la plaque de base adaptée pour recevoir un ou plusieurs composants du mécanisme anti-recul, ainsi qu'une plaque de retenue de mécanisme anti-recul.

18. Appareil selon la revendication 17, dans lequel une partie de la plaque de base et/ou de la plaque de retenue comprend une saillie (90, 91) adaptée pour fixer la seconde extrémité du ressort par rapport à la plaque de base.

19. Appareil selon la revendication 8 ou 16, comprenant en outre un élément de couplage (92) disposé entre le ressort et le rouleau.

20. Appareil selon la revendication 19, dans lequel l'élément de couplage est disposé sur la première extrémité du ressort et la première extrémité est maintenue en place par rapport à l'élément de couplage par une cuvette (94) ou un manchon (96).

21. Appareil selon la revendication 19, dans lequel l'élément de couplage comprend une partie formant cuvette adaptée pour recevoir une partie du rouleau.

22. Appareil selon la revendication 19, dans lequel l'élément de couplage est adapté pour empêcher le ressort de se désengager du rouleau.
